(19) Europäisches Patentamt
European Patent Office
Office européen des brevets

(11) Veröffentlichungsnummer : **0 315 660 B1**

(12) **EUROPÄISCHE PATENTSCHRIFT**

(45) Veröffentlichungstag der Patentschrift :
02.01.92 Patentblatt 92/01

(51) Int. Cl.$^5$ : **B29C 45/16**

(21) Anmeldenummer : **88904497.0**

(22) Anmeldetag : **03.06.88**

(86) Internationale Anmeldenummer :
**PCT/DE88/00331**

(87) Internationale Veröffentlichungsnummer :
**WO 88/09715 15.12.88 Gazette 88/27**

(54) SPRITZKERN FÜR DIE VERWENDUNG BEI EINEM ZWEI-STOFFE-SPRITZGIESSEN.

(30) Priorität : **04.06.87 DE 3718782**

(43) Veröffentlichungstag der Anmeldung :
**17.05.89 Patentblatt 89/20**

(45) Bekanntmachung des Hinweises auf die
Patenterteilung :
**02.01.92 Patentblatt 92/01**

(84) Benannte Vertragsstaaten :
**AT BE CH DE FR GB IT LI LU NL SE**

(56) Entgegenhaltungen :
**AT-B- 378 498**
**FR-A- 1 280 104**
**FR-A- 2 454 975**
**FR-A- 2 572 676**
**FR-A- 2 593 148**

(73) Patentinhaber : **SCHELLENBACH, Frank**
**Tübinger Allee 22**
**W-7032 Sindelfingen (DE)**

(72) Erfinder : **SCHELLENBACH, Frank**
**Tübinger Allee 22**
**W-7032 Sindelfingen (DE)**

(74) Vertreter : **Frohwitter, Bernhard, Dipl.-Ing. et al**
**Bardehle-Pagenberg-Dost-Altenburg**
**Frohwitter-Geissler & Partner Galileiplatz 1**
**Postfach 86 06 20**
**W-8000 München 86 (DE)**

## Beschreibung

Die Erfindung betrifft einen Spritzkern für die Verwendung bei einem Zwei-Stoffe-Spritzgießen, wobei der Spritzkern aus einem ersten und einem zweiten Teilkern besteht und der eine Teilkern nach dem Spritzen des ersten Stoffes um einen vorbestimmbaren Betrag relativ zu dem ersten Spritzling entfernbar und in den entstandenen Zwischenraum der zweite Stoff zur Bildung des zweiten Spritzlings einspritzbar ist. Ein derartiger Spritzkern ist aus der AT-PS 378 498 bekannt.

In der parallelen, nicht vorveröffentlichten Patentanmeldung DE-A-37 03 680.7-16 des Anmelders wird Schutz für ein Verfahren zur Herstellung eines gasdichten Kunststoffverschlusses für Flaschen und dergleichen Behältnisse begehrt, bei dem das an sich bekannte Zwei-Stoffe-Spritzgießen Anwendung findet.

Das Verfahren wird in der Weise genutzt, daß das sog. Formnest in der Form der eigentlichen Verschlußkappe ausgebildet ist, wobei der Innenraum dieser Verschlußkappe in üblicher Weise von einem Spritzkern komplementär begrenzt wird.

Der Spritzkern wird nun nach dem in der dortigen Anmeldung vorgeschlagenen Verfahren um einen vorbestimmten Betrag relativ zu dem ersten Spritzling entfernt und in den so entstandenen Zwischenraum wird der zweite Stoff eingespritzt. Dieser zweite Stoff ist üblicherweise als Dichtung gegenüber der zu verschließenden Flasche ausgelegt.

Das in der dortigen Patentanmeldung geschilderte Verfahren, welches sich also des Zwei-Stoffe-Spritzgießens bedient, hat für die Herstellung von Kunststoffverschlüssen für Flaschen und dergleichen Behältnisse große Vorteile, welche sowohl in der Herstellung als auch in der späteren Verwendung solcher Verschlüsse begründet sind.

Nach dem zuvor geschilderten Verfahren bleibt es in das Belieben des Durchschnittsfachmannes gestellt, auf welche Weise er die relative Wegbewegung des Spritzkerns von dem mit dem ersten Stoff hergestellten Verschluß bewirkt. Da die Flaschenverschlüsse meistens innen mit einem Gewinde versehen sind, mit welchem sie auf die zu verschließende Flasche aufgeschraubt werden können, bietet es sich an, den Spritzkern um einen vorbestimmten Betrag aus dem zuvor gespritzten Verschluß zurückzudrehen und dann in den so entstandenen Zwischenraum den zweiten Stoff einzuspritzen.

Die Erfindung schlägt nun eine andere Möglichkeit vor, nach der der Spritzkern um den vorbestimmten Betrag von dem Verschluß entfernt werden kann.

Danach besteht der Spritzkern aus einem ersten und einem zweiten Teilkern. Diese Aufteilung in zwei Teilkerne eröffnet die Möglichkeit, den einen Teilkern an seinem Platz zu belassen und nur den anderen Teilkern um den vorbestimmten Betrag von dem Verschluß zu entfernen. Diese Maßnahme macht es z.B. möglich, den äußeren Teilkern so auszubilden, daß er die Form für das an dem Verschluß auszubildende Gewinde darstellt. Dieser Teilkern würde in einem solchen Fall ortsfest gehalten, während der innere Teilkern zurückgezogen wird, um den Zwischenraum für das Einspritzen des zweiten Stoffes ausbilden zu können.

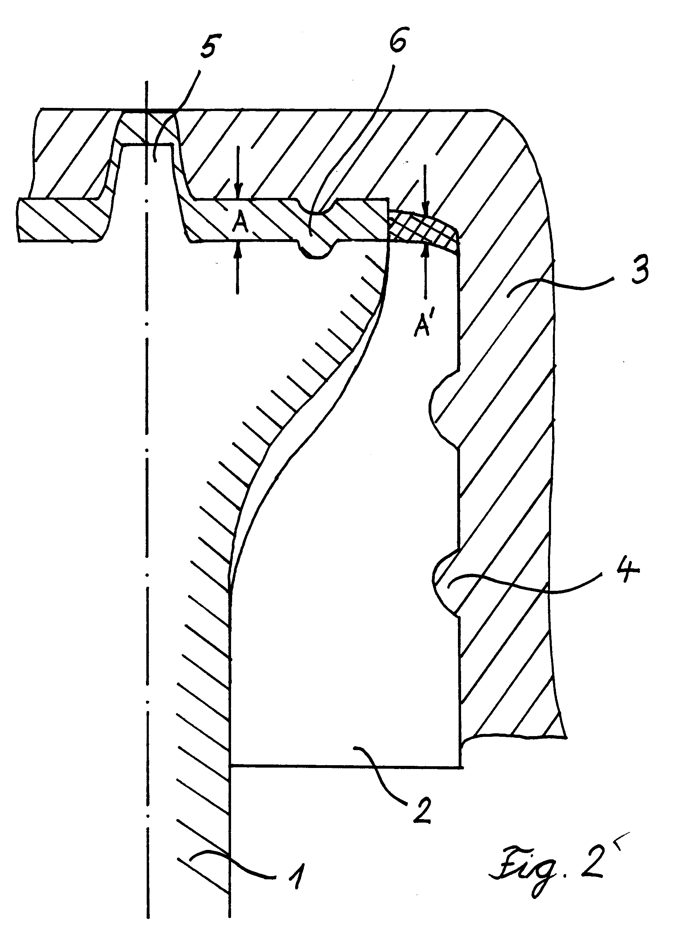

Aus der österreichischen Patentschrift AT-PS 378 498, insbesondere aus den Fig. 2 und 3 in Verbindung mit S. 5, Z. 53, z. B., ist ein Spritzkern mit den Merkmalen des Oberbegriffs des Anspruchs 1 bekannt. Dieser zweiteilige Spritzkern wird nach dem Stand der Technik bei einem Verfahren zur Spritzgußherstellung von Paßstücken für Rohrleitungsverbindungen angewendet. Die bei Rohrverbindungen auftretenden Anschluß- und Dichtungsprobleme sind jedoch von anderer Art, als sie bei kappenartig befestigten Flaschenverschlüssen zu lösen sind.

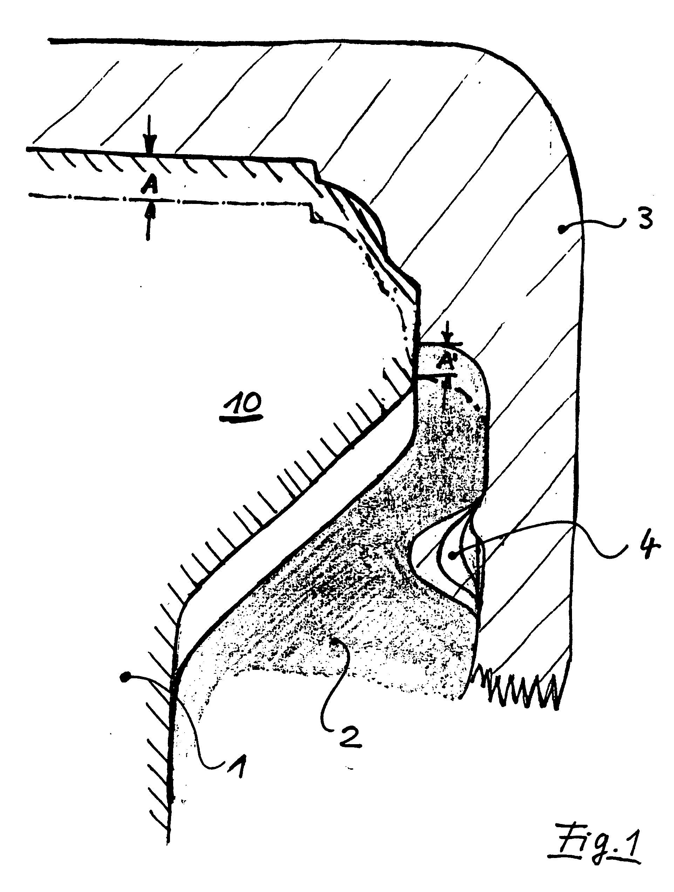

Wenn die bekannte Rohrverbindung einem höheren Innendruck standhalten soll, dann wird laut S. 5, Z. 34 - 41 in Verbindung mit Fig. 1 eine Spannbuchse axial zwischen die Dichtungslippen eingeschoben. Durch diese Spannbuchse wird der innere Schenkel der Dichtung großflächig gegen den Aussenumfang des inneren Rohrstücks gepreßt und so die Dichtigkeit erhöht.

Eine derartige Verschlußtechnik kann man bei einem Flaschenverschluß nicht anwenden, weil eine zusätzliche Spannbuchse zu aufwendig wäre und weil die durch einen höheren Innendruck entstehende - anders als bei einer Rohrverbindung vornehmlich in axialer Richtung wirkende - Kraft auf die Verschlußkappe nicht hinreichend aufgenommen würde.

Die Erfindung sieht ihre Aufgabe deshalb darin, einen Spritzkern der vorausgesetzten Art so zu gestalten, daß der fertige Spritzling bei einfacher Handhabung im Gebrauch allen in axialer Richtung wirkenden Trennkräften sicher standhalten kann. Diese Aufgabe wird bei einem Spritzkern gemäß dem Oberbegriff des Anspruchs 1 durch die Konstruktions- und Verwendungsmerkmale im kennzeichnenden Teils des Hauptanspruchs gelöst.

Ein nach der Erfindung ausgebildeter Spritzkern ermöglicht es, den inneren Teilkern durch Zurückziehen zu bewegen, während der äußere Teilkern an seinem ursprünglichen Ort verbleibt. Damit können vor allen Dingen auch solche Innen- und/oder Außenprofile erzeugt werden, welche das Bewegen eines einteiligen Spritzkernes nach dem Spritzen des ersten Stoffes nicht oder nur schwierig zulassen.

2

Bei der Erfindung wird die axiale Kraft auf eine Verschlußkappe durch innen liegende Profilelemente aufgefangen, die gleichzeitig die Kraft für die Abdichtung bereitstellen. Solche Profilelemente können Gewindegänge, Stege oder Vertiefungen sein, die an der zuerst gespritzten Verschlußkappe angebracht sind und welche die erforderliche Bewegung des Spritzkerns erschweren. Der innere Teilkern allein kann jedoch leicht bewegt werden, um die Stirnfläche der Verschlußkappe für den Anguß des zweiten Spritzlings freizugeben

Die Unteransprüche enthalten bevorzugte Weiterbildungen der Erfindung.

Anhand der Figuren 1 und 2 wird die Erfindung näher erläutert und es werden technische die technischen Besonderheiten verdeutlicht.

Die Figur 1 zeigt im axialen Halbschnitt einen airs einem ersten Teilkern 1 und einem zweiten Teilkern 2 bestehenden Spritzkern 10. Außerdem wird ein Spritzling 3 gezeigt, also eine Verschlußkappe für eine Flasche, welche bereits durch Spritzen des ersten Stoffes erzeugt worden ist. Dieser Spritzling 3 weist einen Gewindegang 4 auf, welcher sich durch eine komplementäre Ausbuchtung im zweiten Teilkern 2 ergibt.

Der zweite Stoff wird eingespritzt, nachdem der erste Teilkern 1 um einen vorbestimmten Betrag A gegenüber dem Spritzling 3 entfernt worden ist. Der Abstand A beträgt beispielsweise 0,7 mm.

Die Aufteilung des Spritzkernes in einen ersten und einen zweiten Teilkern ermöglicht es, beispielsweise den Spritzling 3 statt mit einem Gewinde oder zusätzlich zu einem Gewinde auch mit umlaufenden Kreisstegen oder senkrechten Vertiefungen zu versehen, welche ja ein Herausdrehen des Spritzkernes nach der Fertigstellung des Spritzlings 3 nicht zulassen würden. Da aber der zweite Teilkern 2 während der Herstellung des Verschlusses ortsfest gegenüber dem Spritzling 3 verbleibt, und nur der erste Teilkern 1 eine axiale Bewegung erfährt, kann der für das Einspritzen des zweiten Stoffes erforderliche Zwischenraum hergestellt werden, ohne daß auf dem Spritzling 3 vorhandene Stege u. dgl. hinderlich sein können. In Weiterbildung der Erfindung kann allerdings auch der äußere Teilkern 2 relativ zum inneren Teilkern 1 und in dem ersten Spritzling 3 um den Betrag A' entfernbar sein. Dies kann beispielsweise durch Herausschrauben des Teilkerns 2 um den Betrag A' geschehen. Durch die unterschiedlichen Entfernungen A und A' für den inneren Teilkern 1 und den äußeren Teilkern 2 ergibt sich die Möglichkeit, dem zweiten Spritzling eine kompliziertere Form zu geben. Beispielsweise kann die mit dem zeiten Stoff eingespritzte Dichtung im Außenbereich diinner sein als im Innenbereich.

Es ist für die Erfindung unerheblich, ob die beiden Teilkerne gegeneinander zur Verdrehung mittels Gewindeganges oder aber durch axiales Verschieben bewegt werden. Entscheidend ist letztlich nur, daß die Erfindung es ermöglicht, den gewünschten Zwischenraum für das Einspritzen des zweiten Stoffes zu schaffen, ohne daß Hindernisse am Spritzling 3 dem entgegenstehen können.

Eine andere Weiterbildung der Erfindung sieht vor, daß der innere Teilkern 1 mit Profilelementen versehen ist, die der Ausformung des zweiten Spritzlings dienen. Zwei Beispiele hierfür sind in Fig. 2 dargestellt.

Mit 5 ist ein in das Formnest vorspringender Kegel bezeichnet, der beim Gießen des ersten Spritzlings 3 für eine kleine Öffnung in der Verschlußkappe sorgt. Nach dem Zurücknehmen des inneren Teilkerns 1 und dem Spritzen der Dichtung entsteht in der Mitte eine verhältnismäßig wenig widerstandsfähige Stelle. Der Kegel 5 besteht einerseits aus dem zweiten, weicheren Stoff, andererseits ist die Verschlußkappe 3 in der Umgebung des Kegels 5 dünner als in den übrigen Bereichen.

So kann auf einfache Art eine Berstsicherung in der Verschlußkappe 3 geschaffen wreden. Bei starkem Überdruck in der Flasche kommt es nicht dazu, daß die Flasche zerstört wird oder die Verschlußkappe 3 abgesprengt wird. Vielmehr wird lediglich der Kegel 5 aus der gasdichten Verschlußkappe 3 herausgedrückt. Durch die kleine Öffnung kann dann der Überdruck abgebaut werden, ohne daß größere Flüssigkeitsmengen auslaufen können. Bei einer Stärke von A = 0,7 mm kann der kegelförmige Pfropfen beispielsweise einem Innendruck von 8 bar standhalten. Bei A = 1 mm steigt diese Grenze beispielsweise auf 10 bar an, während bei A = 2 mm etwa 14 bar ertragen werden.

Ein weiteres Beispiel für ein zweckmäßiges Profilelement am zweiten Spritzling ist der Dichtwulst 6. Er ist im Ausführungsbeispiel von Fig. 2 als ringförmige Nur 6 im inneren Teilkern 1 ausgebildet. Der ringförmige Dichtwulst 6 ist im Bereich der axial beanspruchten Kontaktfläche des zweiten Spritzlings vorgesehen. Dieses Profilelement dient der Anpassung der Dichtung an die Form des zu verschließenden Flaschenhalses. Durch die angepaßte Kontaktfläche kann entweder der zulässige Gasdruck erhöht oder der die Abdichtung besorgende Anpreßdruck zwischen Verschlußkappe und Behälterrand verringert werden.

Der Fachmann erhält durch derartige Profilelemente die Möglichkeit, die mittels des erfindungsgemäßen Spritzkerns hergestellte Verschlußkappe an unterschiedliche Anforderungen anzupassen.

**Patentansprüche**

1. Spritzkem für die Verwendung bei einem Zwei-Stoffe-Spritzgießen, wobei der Spritzkern aus einem ersten und einem zweiten Teilkern besteht und der eine Teilkern nach dem Spritzen des ersten Stoffes um einen vorbestimmbaren Betrag relativ zu dem ersten Spritzling entfernbar und in den entstandenen Zwischenraum der zweite Stoff zur Bildung des zweiten Spritzlings einspritzbar ist, **dadurch gekennzeichnet**, daß für das Einspritzen des zweiten Stoffes der innere Teilkern (1) um den vorbestimmbaren Betrag (A) von dem ersten Spritzling (3) entfernbar ist, und daß der äußere Teilkern (2) mit einem der Ausformung des ersten Spritzlings (3) dienenden Profilelement (z. B. Gewinde 4) versehen ist.

2. Spritzkern nach Anspruch 1, dadurch gekennzeichnet, daß außerdem der äußere Teilkern (2) relativ zu dem inneren Teilkern (1) und zu dem ersten Spritzling (3) um einen bestimmten Betrag (A') entfenbar ist.

3. Spritzkern nach Anspruch 1 oder 2, dadurch gekennzeichnet, daß der innere Teilkern (1) mit mindestens einem Profilelement (5, 6) versehen ist, das der Ausformung des zweiten Spritzlings dient.

4. Spritzkern nach Anspruch 3, dadurch gekennzeichnet, daß das Profilelement ein in das Formnest vorspringender Kegel (5) ist.

5. Spritzkern nach Anspruch 3 oder 4, dadurch gekennzeichnet, daß das Profilelement ein ringförmiger Dichtwulst (6) ist.

6. Einrichtung zum Spritzgießen von Kunststoffverschlüssen für Maschen oder dergleichen Behältnisse, bestehend aus einem Formnest und einem Spritzkern gemäß Anspruch 1 bis 5, die zusammen eine Gußform für einen kappenähnlichen Spritzling bilden, dadurch gekennzeichnet, daß der Spritzkern (10) aus einem inneren (1) und einem äußeren Teilkern (2) zusammengesetzt ist, daß der äußere Teilkern (2) mit einem der Ausformung des ersten Spritzlings (3) dienenden Profilelement (z. B. Gewinde, Steg, Vertiefung) versehen ist, und daß der innere Teilkern (1) gegenüber dem Formnest, dem äußeren Teilkern (2) und dem ersten Spritzling (3) beweglich ist, um an der Innenseite des ersten Spritzlings (3) eine zweite Gußform für einen zweiten Spritzling mit einer vorbestimmbaren Schichtdicke (A) freizugeben.

7. Spritzgußeinrichtung nach Anspruch 6, dadurch gekennzeichnet, daß außerdem der äußere Teilkern (2) relativ zu dem inneren Teilkern (1) und zu dem ersten Spritzling (3) entfernbar ist (A').

8. Spritzgußeinrichtung nach Anspruch 6 oder 7, dadurch gekennzeichnet, daß der innere Teilkern (1) mit mindestens einem Profilelement (5, 6) versehen ist, das der Ausformung des zweiten Spritzlings dient.

9. Spritzgußeinrichtung nach Anspruch 8, dadurch gekennzeichnet, daß das Profilelement am inneren Teilkern (1) ein in das Formnest vorspringender Kegel (5) ist.

10. Spritzgußeinrichtung nach Anspruch 8 oder 9, dadurch gekennzeichnet, daß das erste oder weitere Profilelement am inneren Teilkern (1) ein ringförmiger Dichtwulst (6) ist.

11. Verfahren zum Spritzgießen von Kunststoffverschlüssen für Maschen und dergleichen Behältnisse unter Verwendung eines gegenüber einem Formnest beweglichen und aus zwei Teilkernen zusammengesetzten Spritzkerns gemäß Anspruch 1 bis 5, gekennzeichnet durch folgende Verfahrensschritte:

– Herstellung eines ersten, kappenartigen Spritzlings (3) aus einem ersten Stoff

– Entfernung des einen Teilkerns (1) um einen vorbestimmbaren Betrag (A)

– Einspritzen eines zweiten Stoffes in den entstandenen Zwischenraum (A) zur Bildung eines zweiten Spritzlings, der mit dem ersten verbunden ist

– Entfernung beider Teilkerne (gleichzeitig oder nacheinander) des Spritzkerns (10) von dem kombinierten Spritzling

– Ausstoßen der Verschlußkappe aus dem Formnest.

12. Zwei-Stoffe-Spritzgußverfahren nach Anspruch 11, gekennzeichnet durch den zusätzlichen Verfahrensschritt, daß nach der Entfernung des einen Teilkerns (1) um den vorbestimmbaren Betrag (A) der zweite Teilkern (2) um einen zweiten vorbestimmbaren Betrag (A') entfernt wird, bevor der zweite Stoff eingespritzt wird.

13. Zwei-Stoffe-Spritzgußverfahren nach Anspruch 11 oder 12, dadurch gekennzeichnet, daß der zweite Stoff weicher ist als der erste (3), um eine Dichtung für die Verschlußkappe zu bilden.

14. Zwei-Stoffe-Spritzgußverfahren nach Anspruch 11, 12 oder 13, gekennzeichnet durch die Verwendung eines Spritzkerns (10) nach einem der Ansprüche 1 bis 5.

15. Zwei-Stoffe-Spritzgußverfahren nach Anspruch 11, 12 oder 13, gekennzeichnet durch die Verwendung einer Spritzgußeinrichtung nach einem der Ansprüche 6 bis 10.

16 Kunststoffverschluß für eine Masche oder dergleichen Behältnisse, bestehend aus zwei durch Spritzgießen miteinander verbundenen Kunststoffschichten, dadurch gekennzeichnet, daß die formstabilere (3) der beiden Schichten Profilelemente (Gewinde 4, Steg, Vertiefung) zur Befestigung des Kunststoffverschlusses am Öffnungsrand (Flaschenhals oder dergleichen) aufweist, welche nicht von der zweiten Schicht (A, A') bedeckt sind.

17. Kunststoffverschluß nach Anspruch 16, dadurch gekennzeichnet, daß die Profilelemente Gewindegänge (4) umfassen.

18. Kunststoffverschluß nach Anspruch 16 oder 17, dadurch gekennzeichnet, daß die Profilelemente Stege umfassen.

19. Kunststoffverschluß nach einem der Ansprüche 16 bis 18, dadurch gekennzeichnet, daß die Profilelemente Vertiefungen umfassen.

20. Kunststoffverschluß nach einem der Ansprüche 16 bis 19, dadurch gekennzeichnet, daß die weniger formstabile der beiden Kunststoffschichten als Dichtmaterial zwischen dem Behälterrand und der formstabilen Schicht (3) liegt.

21. Kunststoffverschluß nach Anspruch 20, dadurch gekennzeichnet, daß die Dichtungsschicht an die Form der Behälteröffnung (Maschenhals oder dgl.) angepaßt ist.

22. Kunststoffverschluß nach einem der Ansprüche 16 bis 21, dadurch gekennzeichnet, daß die zweite Schicht einen ringförmigen Dichtwulst (6) aufweist.

23. Kunststoffverschluß nach einem der Ansprüche 16 bis 22, dadurch gekennzeichnet, daß die zweite Schicht aus unterschiedlich dicken Teilbereichen (A, A') besteht.

24. Kunststoffverschluß nach einem der Ansprüche 16 bis 23, dadurch gekennzeichnet, daß die formstabilere Schicht (3) an einer bestimmten Stelle (5) in ihrer Materialdicke geschwächt ist.

25. Kunststoffverschluß nach Anspruch 24, dadurch gekennzeichnet, daß die zweite Schicht (A) die Schwachstelle (5) der formstabileren Schicht (3) bedeckt.

26. Kunststoffverschluß nach Anspruch 24 oder 25, gekennzeichnet durch einen kegelförmigen Pfropfen (5), den die zweite Schicht in der Schwachstelle der formstabileren Schicht (3) bildet.


## Claims

1. Injection core for use in two-component injection molding where the injection core consists of a first and a second sub-core and, after injecting the first substance, one sub-core is displaceable by a predetermined amount relative to the first molding and the second substance can be injected into the created intermediate space to form the second molding characterized in that the inner sub-core (1) is, for injecting the second substance, is displaceable from the first molding (3) by the predetermined amount (A), and that the outer sub-core (2) is provided with a profile element (e.g. threading 4) serving the formation of the first molding (3).

2. Injection core according to claim 1 characterized in that in addition, the outer sub-core (2) is displaceable (A') relative to the inner sub-core (1) and to the first molding (3).

3. Injection core according to claim 1 or 2, characterized in that the inner sub-core (1) is provided with at least one profile element (5, 6) which serves the formation of the second molding.

4. Injection core according to claim 3, characterized in that the profile element is a cone (5) projecting into the mold nest.

5. Injection core according to claim 3 or 4, characterized in tha the profile element is a circular sealing bead (6).

6. Device for injection molding of plastic closures for bottles or similar containers, consisting of a mold nest and an injection core, according to claim 1 to 5 which together form a mold for a cap-like molding, characterized in that the injection core (10) comprises an inner (1) and an outer sub-core (2), that the outer sub-core (2) is provided with a profile element (e. g. threading, ridge, recess) serving the formation of the first molding (3), and that the inner sub-core (1) is moveable with respect to the mold nest, the outer sub-core (2) and the first-molding (3) to expose a second mold form on the inside of the first molding (3) for a second molding with a predetermined thickness (A).

7. Injection molding device according to claim 6, characterized in that in addition, the outer sub-core (2) is displaceable (A') relative to the inner sub-core (1) and to the firt molding (3).

8. Injection molding device according to claim 6 or 7, characterized in that the inner sub-core (1) is provided with at least one profile element (5, 6), which serves the formation of the second molding.

9. Injection molding device according to claim 8, characterized in that the profile element on the inner sub-core (1) is a cone (5) projecting into the mold nest.

10. Injection molding device according to claim 8 or 9, characterized in that the first or additional profile element on the inner sub-core (1) is a circular sealing bead (6).

11. Method for injection molding of plastic closures for bottles and similar containers utilizing an injection core comprising two sub-core according to claim 1 - 5 and displaceable with respect to a mold nest, characterized by the following method steps:

– producing a first, cap-like molding (3) of a first substance,

– displacing one sub-core (1) by a predetermined amount (A),

– injection a second substance in the created intermediate space (A) to form a second molding, which is connected to the first one,

– removing both sub-core (simultaneously or one after the other) of the injection core (10) from the combined molding.

– ejecting the closure cap from the mold nest.

12. Two-component injection method according to claim 11, characterized by the additional method step that after displacing the one sub-core (1) by a predetermined amount (A), the second sub-core (2) is displaced by a second predetermined amount (A') before the second substance is injected.

13. Two-component injection molding method according to claim 11 or 12, characterized in that the second substance is softer than the first one (3) to form a sealing for the closure cap.

14. Two-component injection molding method according to claim 11, 12 or 13, characterized by the use of an injection core (10) according to any of the claims 1 to 5.

15. Two-component injection molding method according to claim 11, 12, or 13, characterized by the use of an injection molding device according to any of the claims 6 to 10.

16. Plastic closure for a bottle or similar containers consisting of two plastic layers combined with one another by injection molding characterized in that the more rigid (3) of the two layers comprises profile elements (threading 4, ridge, recess) for fixing the plastic closure on the opening edge (bottle neck or the like), which is not covered by the second layer (A, A').

17. Plastic closure according to claim 16, characterized in that the profile elements include threadings (4).

18. Plastic closure according to claim 16 or 17, characterized in that the profile elements include ridges.

19. Plastic closure according to one of the claims 16 to 18, characterized in that the profile elements include recesses.

20. Plastic closure according to one of the claim 16 to 19, characterized in that the less rigid of the two plastic layers lies between the container edge and the rigid layer (3) as a sealing material.

21. Plastic closure according to claim 20, characterized in that the sealing layer is adapted to the form of the container opening (bottle neck or the like).

22. Plastic closure according to one of the claim 16 to 21, characterized in that the second layer comprises a circular sealing bead (6).

23. Plastic closure according to one of the claim 16 to 22, characterized in that the second layer consists of variously tick sub-sections (A, A').

24. Plastic closure according to one of the claims 16 to 23, characterized in that the more rigid layer (3) is weakened at a certain position (5) with respect to material thickness.

25. Plastic closure according to claim 24, characterized in that the second layer (A) covers the weakened position (5) in the more rigid layer (3).

26. Plastic closure according to claim 24 or 25, characterized by a cone-shaped stopper (5), which is formed by the second layer at the weakened position in the more rigid layer (3).

## Revendications

1. Noyau pour le moulage par injection de deux matières, dans lequel le noyau se compose d'un premier noyau et d'un deuxième noyau et dans lequel l'un des noyaux peut être éloigné après l'injection de la première matière d'une valeur pré-déterminable par rapport à la première partie injectée et dans lequel la deuxième matière peut être injectée dans l'espace formé pour former la deuxième partie injectée, caractérisé par le fait que pour injecter la deuxième matière, le noyau interne (1) est éloigné de la première partie injectée (3) d'une valeur pré-déterminée (A), et que le noyau externe (2) est pourvu d'un élément profilé (par exemple un filetage 4) servant au démoulage de la première pièce injectée (3).

2. Noyau d'injection selon la revendication 1, caractérisé par le fait que de plus, le noyau externe (2) est éloigné par rapport au noyau interne (1) et à la première partie injectée (3) d'une valeur (A') déterminée.

3. Noyau d'injection selon la revendication 1 ou 2, caractérisé par le fait que le noyau interne (1) est pourvu d'au moins un élément profilé (5, 6) servant au démoulage de la deuxième pièce injectée.

4. Noyau d'injection selon la revendication 3, caractérisé par le fait que l'élément profilé est un cône (5) faisant saillie dans l'empreinte de moule.

5. Noyau d'injection selon la revendication 3 ou 4, caractérisé par le fait que l'élément profilé est un bourrelet d'étanchéité (6) en forme d'anneau.

6. Dispositif pour moulage par injection de fermetures en matière plastique pour bouteilles ou récipients similaires, comportant une empreinte de moule et un noyau d'injection selon les revendications 1 à 5, caractérisé par le fait que le noyau d'injection (10) est composé d'un noyau interne (1) et d'un noyau externe (2), et que le noyau externe (2) est pourvu d'un élément profilé (par exemple filetage, nervure, cavité), et que le noyau interne (1) est mobile par rapport à l'empreinte de moule, au noyau externe (2) et à la première pièce injectée (3), pour libérer sur la face intérieure de la première pièce injectée (3) un deuxième moule pour une deuxième

EP 0 315 660 B1

pièce injectée d'une épaisseur de couche (A) pré-déterminée.

7. Dispositif de moulage par injection selon la revendication 6, caractérisé par le fait que de plus, le noyau externe (2) est éloigné (A') par rapport au noyau interne (1) et à la première pièce injectée (3).

8. Dispositif de moulage par injection selon la revendication 6 ou 7, caractérisé par le fait que le noyau interne (1) est pourvu d'au moins un élément profilé (5, 6) servant au démoulage de la deuxième pièce injectée.

9. Dispositif de moulage par injection selon la revendication 8, caractérisé par le fait que l'élément profilé du noyau interne (1) est un cône faisant saillie dans l'empreinte de moule.

10. Dispositif de moulage par injection selon la revendication 8 ou 9, caractérisé par le fait que le premier ou l'autre élément profilé du noyau interne (1) est un bourrelet d'étanchéité (6) en forme d'anneau.

11. Procédé de moulage par injection de fermetures en matière plastique pour bouteilles et récipient similaires par utilisation d'un noyau de moulage mobile par rapport à une empreinte de moule et composé de deux noyaux selon les revendications 1 à 5, caractérisé par les phases opératoires suivantes :
– Fabrication d'une première pièce injectée (3) formant capuchon à partir d'une première matière,
– Eloignement du premier noyau (1) d'une valeur (A) prédéterminée,
– Injection d'une deuxième matière dans l'espace (A) formé pour constituer une deuxième pièce injectée qui est reliée à la première,
– Eloignement des deux noyaux (simultanément ou l'un après l'autre) du noyau d'injection (10), de la partie injectée combinée,
– Ejection du capuchon de fermeture hors de l'empreinte de moule.

12. Procédé de moulage par injection de deux matières selon la revendication 11, caractérisé par la phase opératoire supplémentaire, en ce que après éloignement de l'un des noyaux (1) de la valeur (A) prédéterminée, le deuxième noyau (2) est éloigné d'une seconde valeur (A') pré-déterminée, avant d'injecter la deuxième matière.

13. Procédé de moulage par injection de deux matières selon la revendication 11 ou 12, caractérisé par le fait que la deuxième matière est plus molle que la première (3) pour former un joint d'étanchéité pour le capuchon de fermeture.

14. Procédé de moulage par injection de deux matières selon la revendication 11, 12 ou 13, caractérisé par l'utilisation d'un noyau d'injection (10) selon l'une des revendications 1 à 5.

15. Procédé de moulage par injection de deux matières selon la revendication 11, 12 ou 13, caractérisé par l'utilisation d'un dispositif de moulage par injection selon l'une des revendications 6 à 10.

16. Fermeture en matière plastique pour bouteille ou autres récipients, composée de deux couches de matière plastique reliées l'une à l'autre par moulage par injection; caractérisée par le fait que la plus indéformable (3) des deux couches présente des éléments profilés (filetage 4, nervure, cavité) pour la fixation de la fermeture en matière plastique sur le bord d'ouverture (goulot de la bouteille ou similaire), lesdits élément profilés n'étant pas recouverts par la deuxième couche (A, A').

17. Fermeture en matière plastique selon la revendication 16, caractérisée par le fait que les éléments profilés comprennent des pas de vis.

18. Fermeture en matière plastique selon la revendication 16 ou 17, caractérisée par le fait que les éléments profilés comprennent des nervures.

19. Fermeture en matière plastique selon l'une des revendications 16 à 18, caractérisée par le fait que les éléments profilés comprennent des cavités.

20. Fermeture en matière plastique selon l'une des revendications 16 à 19, caractérisée par le fait que la moins indéformable des deux couches de matière plastique se trouve comme matériau d'étanchéité entre le bord du récipient et la couche (3) indéformable.

21. Fermeture en matière plastique selon la revendication 20, caractérisée par le fait que la couche d'étanchéité est adaptée à la forme de l'ouverture du récipient (goulot de bouteille ou similaire).

22. Fermeture en matière plastique selon l'une des revendications 16 à 21, caractérisée par le fait que la deuxième couche présente un bourrelet d'étanchéité (6) en forme d'anneau.

23. Fermeture en matière plastique selon l'une des revendications 16 à 22, caractérisée par le fait que la deuxième couche se compose de portions de sones (A, A') de différentes épaisseurs.

24. Fermeture en matière plastique selon l'une des revendications 16 à 23, caractérisée par le fait que la couche (3) la plus indéformable est amincie dans son épaisseur de matériau à un endroit déterminé (5).

25. Fermeture en matière plastique selon la revendication 24, caractérisée par le fait que la deuxième couche (A) recouvre la sone d'amincissement (5) de la couche (3) la plus indéformable.

26. Fermeture en matière plastique selon la revendication 24 ou 25, caractérisée par un bouchon (5) conique qui forme la deuxième couche dans la sone d'amincissement de la couche (3) la plus indéformable.

7

Fig. 1

Fig. 2